# EUROPEAN PATENT APPLICATION

(11) **EP 4 332 757 A1**
(43) Date of publication of application: **06.03.2024**
(21) Application number: 22795179.5
(22) Date of filing: 18.01.2022
(51) Int. Cl.: G06F 8/65

(54) **COMMUNICATION DEVICE AND FIRMWARE UPDATE SYSTEM**

(30) Priority: 27.04.2021 JP 2021075450
(71) Applicant: Hitachi Industrial Equipment Systems Co., Ltd., Tokyo 101-0021 (JP)
(72) Inventor: SHIRANE Kazuto, Tokyo 101-0021 (JP); SHIMODA Kenji, Tokyo 101-0021 (JP); KIHARA Hajime, Tokyo 101-0021 (JP)
(74) Representative: MERH-IP Matias Erny Reichl Hoffmann Patentanwälte PartG mbB
(86) International application number: PCT/JP2022/001678
(87) International publication number: WO 2022/230256

(57) **Abstract**

A communication device comprising,
a local communication unit communicating with an apparatus,
a memory unit storing firmware for the apparatus,
if the history of activation and deactivation as an external storage terminal by the apparatus is determined to be a predefined sequence, communication device that is not activated as an external storage terminal or that operates in such a way that the firmware is not visible from the apparatus.

## Description

### TECHNICAL FIELD

This invention relates to a communication device and firmware update system.

### BACKGROUND ART

Patent document 1 is known as a technology related to a firmware update system. The patent document 1 is disclosing "Before the so-called firmware update, in which a new firmware is downloaded from the server 2 to the printer 1 and the firmware stored in the nonvolatile memory 16 is updated to the new firmware, a firmware for recovery is downloaded from the server 2 to the memory 32 of PC3.
If the firmware update fails, the PC3 sends the recovery firm to the printer 1, and the printer 1 stores the recovery firm received from the PC3 in the nonvolatile memory 16.". According to Patent Document 1, it is described that a firmware update system and a firmware update method are provided that can eliminate the need for troublesome recovery operations by a user when recovering firmware.

### CITATION LIST

### PATENT DOCUMENT

Patent Documents 1 Unexamined Japanese Patent Publication No. 2019-133407

### SUMMARY OF THE INVENTION

### PROBLEMS TO BE SOLVED BY THE INVENTION

In Patent Document 1, firmware is downloaded from the server to the printer, which is an apparatus, via LAN. However, some apparatuses are not capable of wide-area communication that allows direct communication with the server. Such an apparatus may incorporate a local communication function that does not allow direct communication with the server or host computer but does allow communication with the target device. Examples of such apparatuses are compressors and program controllers, and an example of local communication is USB communication.

One way for an apparatus with USB communication functions to rewrite its firmware using USB communication is, for example, to start up the apparatus with a recording medium with USB communication functions (so-called USB memory) connected. When the apparatus starts up, if a storage medium is connected to its USB port and if the storage medium contains data for rewriting its firmware, the apparatus rewrites its firmware using that data.

On the other hand, if no recording medium is connected to its USB port, or if a recording medium is connected but no data to rewrite its own firmware is recorded, this apparatus will not rewrite the firmware.

When a user of such an apparatus equipped with only local communication rewrites the firmware, the user must, for example, use a PC (personal computer) or other computer equipped with both wide-area and local communication functions, download data from the host computer to the PC or other computer via wide-area communication, write the data to the recording medium via local communication, and then connect the recording medium to the target apparatus.

Therefore, it is difficult to automate firmware, updates because of the work involved in physically reconnecting such recording media to the apparatus.

In the case of an apparatus that, as mentioned above, has a function to rewrite firmware if data for rewriting firmware is written to a recording medium connected to it at the time of startup, the firmware will be rewritten every time the apparatus starts up, even after the firmware rewriting is completed, as long as the recording medium is connected. Such repetitive firmware writing will prevent the apparatus from performing its original task. To avoid this, the recording media must be removed from the apparatus when the firmware rewriting is complete, which is another obstacle to automating firmware updates.

The purpose of this invention is to easily prevent repeated rewriting of firmware for apparatuses that have local communication functions but no wide-area communication functions.

One preferred example of the invention is a communication device comprising, a local communication unit that communicates with the apparatus, a memory section that stores the firmware for the apparatus, if the history of activation and deactivation as an external storage terminal by the apparatus is determined to be a predefined sequence,
the firmware is not activated as an external storage terminal by the apparatus, or the firmware is not visible from the apparatus.

Another preferred example of the invention is a firmware update system with an apparatus and a device that connects to the apparatus,
the apparatus comprising,
an apparatus side storage unit storing data,
an apparatus side processing unit processing data,
a communication unit on the apparatus side for local communication,
requesting the device to read out data,
if the device contains data for firmware update, the firmware is updated with the data read from the device,
operating by executing the firmware by said apparatus side processing unit,
the device comprising,
a device side storage unit storing data,
a device side processing unit processing data, and
a device side local communication unit communicating with the apparatus,
when the device side local communication unit receives a query from the apparatus regarding the type of the device,
the device-side local communication unit replies with the information that the device is an external storage device,
if the data for firmware update is recorded in the device side memory, the data for firmware update is sent in response to a request for reading data from the apparatus,
when a predetermined sequence of signals is given to the device from the apparatus, the device's behavior as an external storage device is terminated.

### EFFECTS OF THE INVENTION

The invention can easily prevent repeated rewriting of firmware for an apparatus that has local communication functions but no wide-area communication functions.

### BRIEF DESCRIPTION OF DRAWINGS

Fig. 1: Conceptual diagram of the firmware update system in example 1.
Fig. 2: The functional block diagram of the firmware update system in example 1.
Fig. 3: Flowchart showing the operation of apparatus in example 1.
Fig. 4: Flowchart showing the operation of the communication device in example 1.
Fig. 5: Flowchart showing the operation of the firmware update system in example 1.

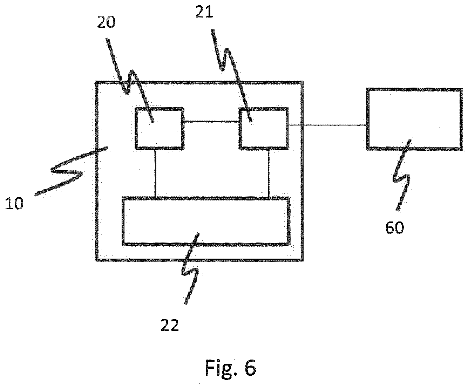

Fig. 6: The functional block of the firmware update system in example 2.

### MODE FOR CARRYING OUT THE INVENTION

The following examples will be explained with the aid of drawings..

### [Example 1]

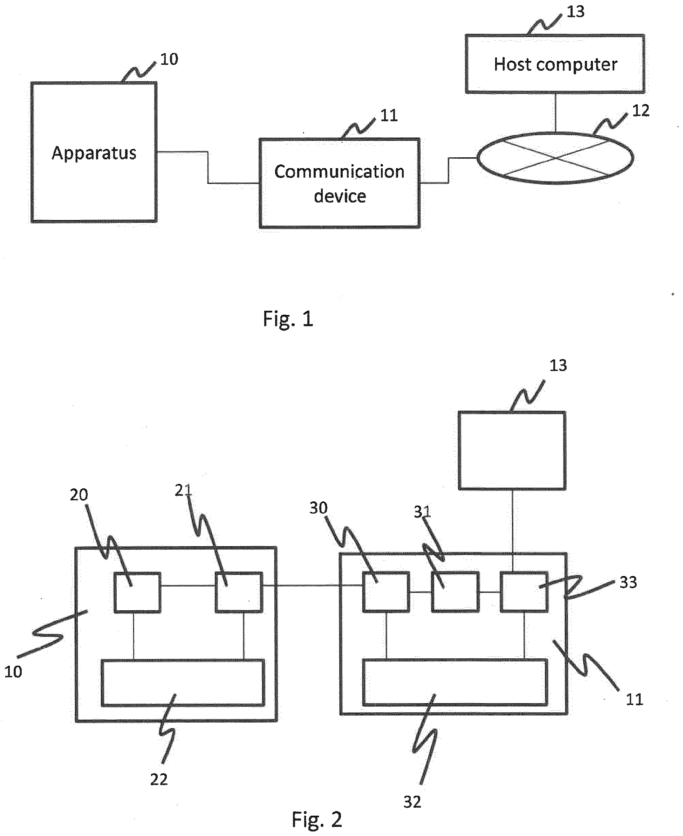

Fig. 1 shows a conceptual diagram of the firmware update system in example 1.

The firmware update system has a host computer 13, a communication device 11 that communicates with the host computer 13 over a wide area such as the Internet via a network 12, and an appliance 10 that communicates locally with the communication device 11.

Communication means that can communicate with a host computer 13 such as a server in a remote location via a network such as wireless or the Internet is called wide-area communication, while communication means that connect to a remote location via a short distance or physical connection is called local communication.
An example of wide-area communication is a cellular phone line. communication device 11 can connect and exchange data with host computer 13 wirelessly via a cellular phone line through a base station. The communication device 11 can also communicate with the target apparatus 10 by local communication. Here, communication via USB connection is described as an example of local communication, but it includes serial communication and other local communication standards that allow the apparatus10 to update its firmware from the connection point.

When the power is turned on, if there is an apparatus (USB memory, etc.) connected to the USB terminal, the apparatus 10 updates the firmware with the data read from the USB memory if the USB memory has the specified data (boot image). When reading data from the USB memory, the file system existing in the USB memory is mounted (activated). When the USB memory is no longer in use (e.g., shutdown), the mounted file system is unmounted (deactivated). An example,of an apparatus 10 that is pre-equipped with these functions is a control apparatus such as a PLC (programmable controller) used to control a compressor or other industrial apparatus.

The communication device i1 downloads and stores the data necessary for rewriting the firmware of the apparatus 10 from the host computer 13 via a network 12 such as the Internet. The device can act as if it were a USB memory stick as an external storage device that contains the data necessary for firmware rewriting to the apparatus 10.

Furthermore, after communication device 11 begins to behave as if it were a USB memory with recorded data necessary for firmware rewriting, if it is unmounted a predetermined number of times, it will cease to behave as if it were a USB memory with the above data recorded.

Specifically, it behaves as if it "can be recognized as a USB memory by the other party's apparatus, but the above data is not recorded" or "cannot be recognized as a USB memory".

Fig. 2 shows the functional block diagram of the firmware update system and the apparatus10 to be updated in example 1. A communication device11 equipped with a function to communicate with the target apparatus10 by local communication and a wide-area communication function is prepared as shown in Fig. 2.

Apparatus 10 has an apparatus side processing unit 20 that processes data, an apparatus side local communication unit 21 for local communication with communication device 11, and an apparatus side storage unit 22 that stores data.

At startup, the apparatus-side processing unit 20 reads the firmware data recorded in the apparatus side storage unit 22, and the apparatus-side processing unit 20 executes the firmware with the firmware data. It operates by executing the firmware.

Communication device 11 has a local communication unit on the side of communication device 30 that communicates with apparatus 10, a communication device side processing unit 31 that processes data, a communication device side storage unit 32 that stores data, and a communication device side wide-area communication unit 33 that communicates with host computer 13 that distributes firmware.

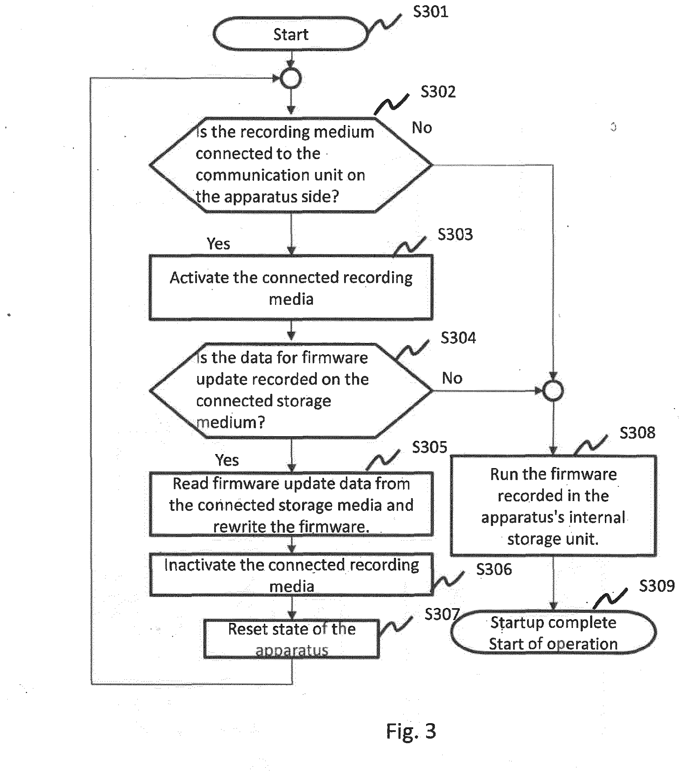

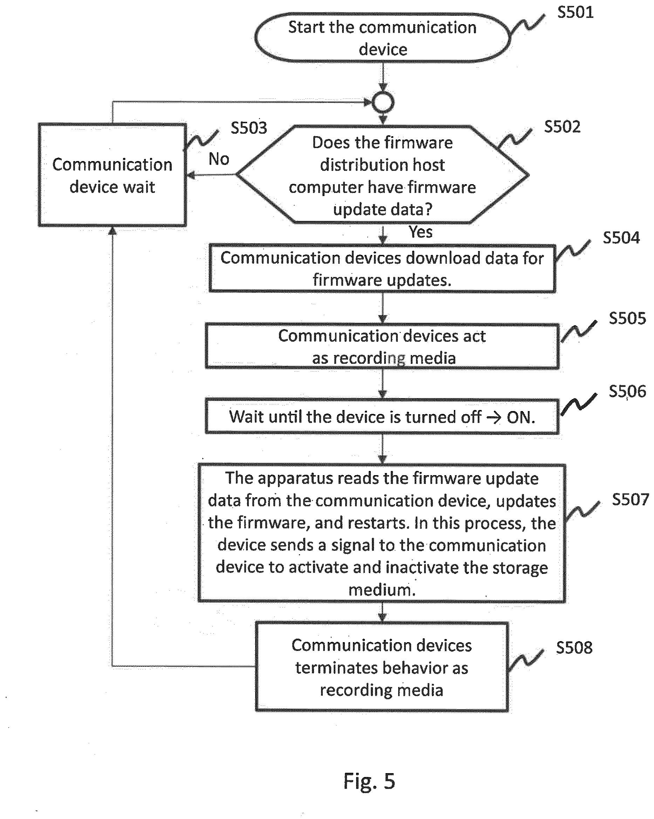

Apparatus 10 and communication device 11 are equipped with a CPU, ROM, RAM, and other peripheral circuits, etc. In apparatus 10, the CPU as apparatus side processing unit 20 reads and writes data to and from apparatus-side storage unit 22 and controls apparatus side local communication unit 21. The control in the apparatus 10 will be described later in the flowchart, but the CPU as the apparatus side processing unit 20 reads and executes the program, and the processing of Figs. 3 and 5 is executed.

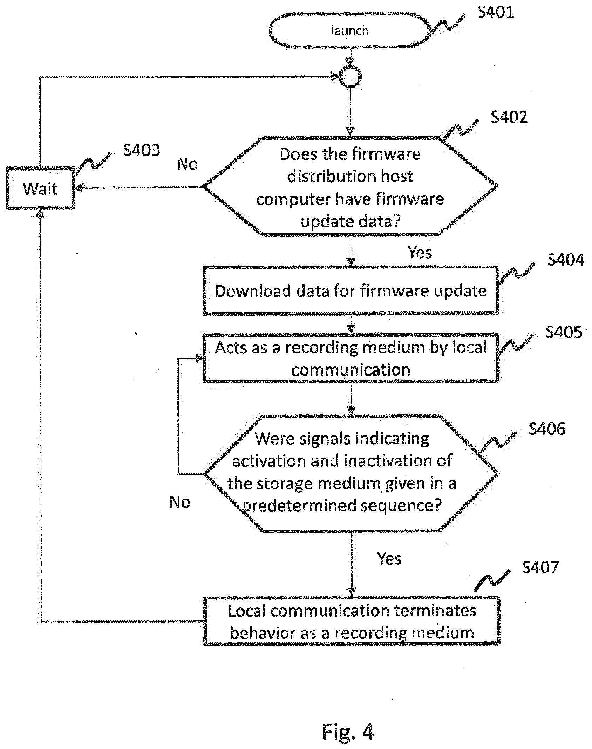

In communication device 11, the CPU as communication device side processing unit 31 reads and writes data to and from communication device side storage unit 32 and controls local communication device side wide-area communication unit 33. Regarding the control of the communication device 11, as will be described later in the flowchart, the CPU as the communication device side processing unit 31 reads and executes the program, and the processing of Figs. 4 and 5 is executed.

The communication device 11 uses the wide-area communication function to obtain the data used by the apparatus 10 to update the firmware and further stores this data in the communication device side storage 32. At the same time, communication device 11 can act as an external storage medium connected to apparatus 10 via local communication.

Furthermore, if the data used to update the firmware is recorded on the communication device side storage unit 32, it will behave as an external storage device with the data used to update the firmware through local communication to be able to update the firmware.

Communication device 11 can also behave as if it were an external storage device that does not have the data used to update the firmware, even if the data used to update the firmware is recorded in its own communication device side storage unit 32.

The target apparatus 10 is a specification that, when reading data from a communication device 11 or storage medium connected by local communication, activates the communication device 11 or storage medium as a preparatory operation.

The apparatus 10 is also specified to deactivate the communication device 11 as an external storage device when the communication device 11 in the activated communication device 11 is no longer used. In addition, during this activation and deactivation, this apparatus 10 transmits the specified signals to the communication device 11 as this external storage device using local communication, respectively.

If the target apparatus 10 is connected to communication device 11 as an external storage device by local communication when it is activated,
and if the data for rewriting its firmware is recorded in the communication device 11 side storage unit 32, the firmware shall be rewritten using that data.

When the rewriting is completed, the apparatus 10 shall inactivate the communication device 11 as an external storage device connected by local communication, and then restart the apparatus 10.

When communication device 11 acquires the data used to update the firmware through wide-area communication and records it in its own storage device, communication device side storage unit 32, it starts to behave as if it were an external storage device that has recorded the data used to update the firmware for the other party communicating with it using local communication.

Further, when the communication device 11 transmits a signal indicating that the communication device as an external storage device has been inactivated from the apparatus 10 that is the local communication partner for a predetermined number of times, It shall stop behaving as if it were an external storage device in which data used to update the firmware was recorded.

By doing the above, the firmware of the apparatus 10 will be automatically updated as follows. First, communication device 11 acquires data to update the firmware of the target apparatus 10 through wide-area communication.

The trigger for acquiring this data is, for example, a periodic inquiry is made from the communication device 11 to the host computer 13 that holds this data by wide-area communication, and as a response to this inquiry, it is possible that the acquisition of data for updating firmware is instructed. Conversely, when it is necessary to update data, the communication device 11 can be accessed via wide-area communication in the form of pushing from the host computer 13 and the firmware can be downloaded.

When communication device 11 acquires the data to update the firmware, it begins to behave as if it were an external storage device that communicates to the target apparatus 10 using local communication and that has recorded the data to update the firmware. The communication device 11 will then continue to operate in this state.

In this situation, when the target apparatus 10 is activated, the apparatus10 tries to rewrite the firmware of the apparatus 10 using data to update the firmware recorded in communication device 11.

When the firmware rewriting is completed, the apparatus 10 reboots itself and tries to start with the new firmware. In performing this restart, the apparatus10 attempts to deactivate the communication device11 as an external storage device connected by local communication and sends a signal to the connected external storage device, i.e., communication device.

When communication device 11 receives a signal to inactivate, it stops behaving as if it were an external storage device with data recorded to update the firmware.

If communication device 11 continues to behave as if it were an external storage device with data recorded to update the firmware during the above restart of the target apparatus10, the apparatus10 will data to update the firmware, the apparatus10 will try to rewrite its own firmware again using the data to update the firmware. To avoid this, communication device11 changes its behavior as described above.

Fig. 3 is a flowchart showing the operation of apparatus in example 1.

For example, assuming an industrial controller that employs USB as the local communication and a USB memory as the storage medium to be connected to it, and if this USB memory contains data for updating firmware with predefined characteristics, the firmware is updated as shown in Fig. 3.

In the operation flow of this example, the apparatus 10, which is an industrial controller that controls an industrial apparatus such as a compressor, is first started or restarted (S301). In the process of starting up, the apparatus side processing unit 20 determines whether the apparatus side local communication unit 21 is connected to an external storage device (storage medium) (S302). Here, the external storage device is communication device 11 and the local communication is USB communication.

To determine whether apparatus side local communication unit 21 is connected to an external storage device (storage medium), a query about the type of communication device is sent from apparatus side local communication unit 21 to communication device 11.

If the apparatus side local communication unit 21 receives information from the local communication unit on the side of the communication device 30 that the device is an external storage device storage medium), the apparatus side processing unit 20 determines that the device is connected to an external storage device (storage medium).

If apparatus side local communication unit 21 is connected to an external storage device (storage medium), apparatus side processing unit 20 activates the connected external storage device (storage medium) (S303).

After S303, apparatus side processing unit 20 determines whether the connected external storage device (storage medium) has recorded data for firmware update (S304).

In determining whether firmware update data is recorded on an external storage device (storage medium), the apparatus side local communication unit 21 makes a request to communication device 11 to read the firmware update data as a query.

After sending the inquiry, the apparatus side local communication unit 21 receives information from the local communication unit on the side of communication device 30 that the data for firmware update has been recorded, the apparatus side processing unit 20 judges that the data for firmware update has been recorded in the external storage device (storage medium).

If the data for firmware update is recorded in the external storage device (storage medium), apparatus side processing unit 20 reads the data for firmware update from the connected storage medium and rewrites the firmware with the read firmware update data(S305) .

After S305, the apparatus side processing unit 20 inactivates the connected external storage device (storage medium) (S306).

After S306, apparatus side processing unit 20 resets apparatus 10 again (S307).

After the reset in S307, return to S302.

If it is determined in S302 that apparatus side local communication unit 21 is not connected to an external storage device (storage medium), and if it is determined in S304 that the connected external storage device (storage medium) does not have firmware update in the connected external storage device (storage medium) in S304, the apparatus side processing unit 20 executes the firmware recorded in the apparatus side storage unit (S308).

After S308, the apparatus side processing unit 20 initiates the startup completion operation (S309).

Fig. 4 is a flowchart showing the operation of communication device 11 in example 1. The communication device 11 in this example performs the operation shown in Fig. 4 when it is connected to the apparatus 10, which performs the operation shown in Fig. 3.

The communication device 11 starts up (S401). communication device side processing unit 31 determines whether data for firmware update exists in the firmware distribution host computer 13 (S402).

If the communication device 11 periodically inquires the firmware distribution host computer 13 via wide-area communication and is instructed by the firmware distribution host computer 13 to acquire data for updating the firmware in response to this inquiry, the communication device side processing unit 31 determines that data for updating the firmware exists in the firmware distribution host computer 13. In this case, the communication device side processing unit 31 determines that the data for updating the firmware exists in the firmware distribution host computer 13.

If the firmware update data exists in the firmware distribution host computer 13, the communication device side processing unit 31 downloads the firmware update data to the communication device side storage unit 32 through communication between the firmware distribution host computer 13 and the communication device side wide-area communication unit 33 (S404).

After S404, communication device side processing unit 31 behaves as an external storage device (storage medium) by local communication with apparatus 10, communication device 11 (S405).

In S405, communication is performed between apparatus 10 and communication device 11, as shown in S302 of Fig. 3, and communication device 11 acts as an external storage device (storage medium).

After S405, communication device side processing unit 31 determines whether a signal indicating activation or deactivation of the external storage device (storage medium) is given by apparatus 10 in a predetermined sequence (S406). Related to S406 communication between apparatus 10 and communication device 11 is shown in steps S303, S304, S305, and S306 of Fig. 3.

When steps S303, S304, S305, and S306 in Fig. 3 are completed and data for firmware update is sent from communication device 11 to apparatus 10, the communication device side processing unit 31 determines that a signal indicating activation or deactivation is given by apparatus 10 in the prescribed sequence.

In S406, when a signal indicating activation and inactivation of the external storage device (storage medium) is given in a predetermined sequence, the communication device side processing unit 31 terminates its behavior as an external storage device (storage medium) by local communication (S407).

There are two local communications that terminate the behavior as an external storage device (storage medium): (1) and (2) below.

(1) The apparatus side local communication unit 21 sends a query to communication device 11 regarding the type of device, and communication device side processing unit 31.

The communication device side processing unit 31 causes the apparatus side local communication unit 21 to transmit information from the local communication unit on the side of communication device, 30 that it is not an external storage device, and then the device behaves as an external storage device (storage medium) is terminated.

(2) The apparatus side local communication unit 21 sends a query to communication device 11 regarding the type of device, and the apparatus side local communication unit 21 sends information that the device is an external storage device from the local communication unit on the side of the communication device 30.

After that, apparatus side local communication unit 21 sends a query to the communication device11 asking if the firmware update data has been recorded.

In response to the inquiry, the communication device side processing unit 31 informed that no firmware update data was recorded from the local communication unit on the side of communication device30 when the communication unit 21 transmits, it terminates the behavior as an external storage device (storage medium).

In S402, communication device 11 periodically inquires the firmware distribution host computer13 via wide-area communication. If there is no indication from the firmware distribution host computer 13 to acquire data to update the firmware as a response to this inquiry, or if there is no data to update the firmware, the communication device side processing unit31 judges that there is no data for firmware update in the firmware distribution host computer13. Then, communication device 11 waits (S403).

After the wait in S403, if the host computer13 periodically checks the firmware, it periodically returns to S402. When the host computer13 side prompts the firmware update, instead of S402, a communication step to access communication device 11 from the host computer 13 side is performed.

If data for firmware update exists, the firmware is downloaded (S404).

When the apparatus 10 starts or restarts, if it receives a signal to activate communication device 11 as an external storage device via local communication, communication device 11 is activated (mounted) by the apparatus 10 as an external storage device (S405). (S405). When the apparatus 10 is stopped or restarted, it is deactivated (unmounted).

If it is determined in S406 that signals indicating activation or deactivation of the external storage device (storage medium) are not given in a predetermined sequence, the communication device 11 returns to S405, and through local communication with the apparatus 10, the external storage device (storage medium), which is activated and deactivated as usual.

On the other hand, if communication device 11 receives a signal indicating activation or deactivation in a predetermined sequence from apparatus 10, it will start operating in such a way that it will not be activated even if it receives a signal to be activated when the apparatus is restarted.

The communication device 11 stores records of received signals indicating activation or deactivation, or records of actual activation or deactivation, and records of new firmware downloads in the communication device-side storage unit 32. The flag data that determines that the firmware has been updated by a predetermined sequence can also be recorded in communication device side storage unit 32 (S406).

After downloading a certain firmware version from the host computer, the communication device side storage unit 32 has flag data to determine that the firmware for that version has been updated, or the activation record is checked directly. When the apparatus10 is restarted (S407) the device is set to not be activated even if it receives a signal to activate the communication device 11 and waits (S403).

A predetermined sequence may be, for example, when a firmware version is first activated as an external storage device after it has been downloaded from the host computer and then deactivated. It can also be set, for example, when a device is inactivated after being activated for more than a predetermined period.

As a method of performing an operation that is not activated even when a signal for activating the communication device 11 is received, the setting may be set to reject the USB connection, or the apparatus 10 side may not recognize that the external storage device is connected to USB.

When firmware is newly downloaded in S402, the data and settings are changed so that the updated flag is released if it is managed as data. If the determination is based on the activation record for each firmware version, the activation sequence is determined based on the latest version.

Furthermore, as an alternative to the behavior of communication device 11 not to be activated, it is possible to switch the setting where the firmware data does not appear to be present in the storage area where the firmware is checked when the apparatus 10 is activated as an external storage device.

Fig. 5 is a flowchart showing the operation of apparatus 10 and communication device 11 in updating the firmware in example 1.

Communication device 11 starts up (S501). communication device side processing unit 31 determines whether data for firmware update exists in firmware distribution host computer 13 (S502). The judgment in S502 is the same as that in S402 of Fig. 4.

If the firmware update data exists in the firmware distribution host computer 13, the communication device side processing unit 31 downloads the firmware update data to the communication device side storage unit 32 by communication between the firmware distribution host computer 13 and the communication device side wide-area communication unit 33 (S504).

After S504, communication device side processing unit 31 behaves as an external storage device (storage medium) by local communication with apparatus 10, communication device 11 (S505).

After S505, wait until the power of the apparatus 10 goes from OFF to ON (S506).

After the power of the apparatus 10 is turned on at S506, the apparatus side processing unit 20 of the apparatus 10 reads the data for firmware update from the communication device 11, updates the firmware, and restarts. In this process, apparatus 10 sends signals to communication device 11 to activate and deactivate the external storage device (storage medium) (S507).

After S507, communication device side processing unit 31 of communication device ends its behavior as an external storage device (storage medium) (S508). S508 is as same as S407 in Fig. 4.

If it is determined in S502 that no firmware update data exists in the firmware distribution host computer 13, and after S508, communication device 11 waits (S503).

After S503 communication device 11 waits, return to S502.

By combining apparatus 10, which performs the operation shown in Fig. 3, and communication device 11, which performs the operation shown in Fig. 4, in the configuration shown in Fig. 2, to form the firmware update system in this example, the firmware update system performs the operation shown in Fig. 5.

As shown in Fig. 5, the apparatus 10 performs a firmware update. In addition, during this process, the apparatus 10 sends a specific sequence of signals to the communication device 11 to activate and deactivate the external storage device (storage medium), which causes the communication device 11 to terminate its behavior as an external storage device (storage medium). This terminates the behavior of communication device 11 as an external storage device (storage medium).

If communication device 11 continues to act as an external storage device (storage medium) and continues to act as if the external storage device (storage medium) contains data for firmware updates, the apparatus 10 will follow the flow shown in Fig. 3 to rewrite its own firmware again, requiring human intervention.
If the communication device 11 is simply left connected to the apparatus 10, it will rewrite its firmware to the latest firmware at the appropriate time.

It is possible to build a system that updates the firmware online, without requiring human intervention in the vicinity, without making at least major changes to the apparatus 10, and in some cases without making any changes.

To avoid such behavior, the communication device 11 in this example, when the external storage device (storage medium) activation and deactivation signals are sent to the communication device 11 in a specific sequence, as shown in Fig. 4, communication device 11 either terminates its behavior as an external storage device (storage medium) or continues to behave as an external storage device (storage medium) but behaves as if no data for firmware update is recorded.

If the external storage device (storage medium) is a USB memory, activation of the external storage device (storage medium) is performed as a mount operation, and deactivation is performed as an unmount operation. Therefore, in this example, the communication device terminates its behavior as an external storage device (storage medium) when it is mounted and unmounted by the other party's apparatus 10 in the specified order.

In this example, communication device 11 performed local communication with apparatus 10 to terminate its behavior as an external storage device (storage medium).

If the apparatus 10 determines that it is connected to an external storage device (storage medium) (occurrence of repeated firmware updates) in S302 after restarting in S309 of Fig. 3. By executing a process such as inactivating the external storage device (storage medium), the apparatus 10 may be provided with a process that prevents repeated rewriting of the firmware of the apparatus 10 instead of S303.

According to example 1, repeated rewriting of the firmware of the apparatus 10 can be easily prevented for the apparatus 10 that has a local communication function but no wide-area communication function.

### [Example 2]

Example 1 is a case in which communication device 11 communicates with host computer 13 over a wide area and the data (including the program) for executing the update of the firmware of apparatus 10 is communication device side storage unit 32 in advance.

In example 2, the data for executing the firmware update was downloaded from the host computer 13 to a computer such as a PC (personal computer) capable of wide area communication, and once downloaded to the PC. This is an example of a case in which the data is recorded in device 60 as an external storage device, and the data for executing the firmware update is sent from that device 60 to apparatus 10. The same explanations as in example 1 are omitted.

The configuration of the device 60 connected to the apparatus 10 is the same as in example 1.

Although not shown in the figure, device 60 has a device-side local communication unit that communicates with apparatus 10, a device-side processing unit that processes data, and a device-side storage unit that stores data.

In addition, the device-side memory section contains prerecorded data to perform the update of the firmware of the apparatus 10.

In this example, the flowchart for the operation of apparatus 10 is the same as the flowchart in Fig. 3.

Further, since the flowchart for the operation of the device 60 is recorded in advance in the device side storage unit for executing the firmware update of the apparatus 10, the step of downloading the firmware update data is unnecessary. It has the same step as S405, S406 and S407 in Fig.4 of example1 communication device 11.

After terminating the behavior as a recording medium by local communication with the apparatus 10 of S407, the device 60 enters a standby state.

According to example 2, compared to communication device 11 in example 1, device 60 is equipped with a local communication unit but does not need a wide-area communication unit. Also, as in example 1, repeated rewriting of the firmware of the apparatus 10 can be easily prevented by communication between the device 60 and the apparatus 10.

### REFERENCE SIGNS LIST

- 10: apparatus
- 11: communication device
- 12: network
- 13: host computer
- 20: apparatus side processing unit
- 21: apparatus side local communication unit
- 22: apparatus side storage unit
- 30: local communication unit on the side of communication device
- 31: communication device side processing unit
- 32: communication device side storage unit
- 33: communication device side wide-area communication unit
- 60: device

## Claims

1. .A communication device comprising,
a local communication unit that communicates with the apparatus,
a memory section that stores the firmware for the apparatus,
if the history of activation and deactivation as an external storage terminal by the apparatus is determined to be a predefined sequence,
the firmware is not activated as an external storage terminal by the apparatus, or the firmware is not visible from the apparatus.

2. . A communication device according to claim 1 comprising,
a wide-area communication unit that communicates with the host computer over a wide area,
downloading updated firmware for said apparatus from said host computer.

3. . A communication device according to claim 1,
the predetermined sequence is when a version of firmware is first activated and then deactivated after being stored.

4. . A communication device according to claim 1,
a method of not being activated is set to reject connections from the apparatus, or to not allow the apparatus to recognize that an external storage device is connected.

5. . A communication device according to claim 1,
the storage section storing a come-and-go flag that satisfies the predetermined sequence.

6. . A communication device according to claim 1,
if the memory section stores new firmware,
communication device reverts to the connection settings with the apparatus before determining that the sequence is the predetermined sequence.

7. .A firmware update system with an apparatus and a device that connects to the apparatus,
the apparatus comprising,
an apparatus side storage unit storing data,
an apparatus side processing unit processing data,
a communication unit on the apparatus side for local communication,
requesting the device to read out data,
if the device contains data for firmware update, the firmware is updated with the data read from the device,
operating by executing the firmware by said apparatus side processing unit,
the device comprising,
a device side storage unit storing data,
a device side processing unit processing data, and
a device side local communication unit communicating with the apparatus,
when the device side local communication unit receives a query from the apparatus regarding the type of the device,
the device-side local communication unit replies with the information that the device is an external storage device,
if the data for firmware update is recorded in the device side memory, the data for firmware update is sent in response to a request for reading data from the apparatus,
when a predetermined sequence of signals is given to the device from the apparatus, the device's behavior as an external storage device is terminated.

8. . A firmware update system according to claim 7,
the apparatus inactivates the external storage device, thereby terminating its behavior as an external storage device.

9. . A firmware update system according to claim 7,
replying to the apparatus that said device is not existing, and terminates its behavior as an external storage device.

10. . An apparatus that updates firmware by receiving data from a device connected to the apparatus,
the apparatus comprising,
an apparatus side storage unit storing data,
an apparatus side processing unit processing data,
a communication unit on the apparatus side for local communication,
requesting the device to read out data,
if the device contains data for firmware update, the firmware is updated with the data read from the device,
operating by executing said firmware by said apparatus side processing unit,
receiving data for firmware update from the device in response to a request for data read from the apparatus,
when a predetermined sequence of signals is given to the device, the apparatus that terminates the behavior of the device as an external storage device.

11. . A method of updating the firmware of a system having an apparatus and a device connected to the apparatus,
the apparatus,
requesting the device to read out data,
if the device contains data for firmware update, the firmware is updated with the data read from the device,
operating by executing said firmware,
the device is,
when a query regarding the type of device is received from the apparatus, it replies with the information that the device is an external storage device,
if the data for firmware update is recorded, the data for firmware update is sent in response to a request for reading data from the apparatus,
when a predetermined sequence of signals is given to the device, from the apparatus, the device's behavior as an external storage device is terminated.
